(19) 

**Europäisches Patentamt**
**European Patent Office**
**Office européen des brevets**

(11) **EP 4 560 734 A1**

(12) **EUROPEAN PATENT APPLICATION**
published in accordance with Art. 153(4) EPC

(43) Date of publication:
**28.05.2025 Bulletin 2025/22**

(21) Application number: **23912816.8**

(22) Date of filing: **22.12.2023**

(51) International Patent Classification (IPC):
$H01M\ 4/525^{(2010.01)}$    $H01M\ 4/505^{(2010.01)}$
$H01M\ 4/131^{(2010.01)}$    $H01M\ 10/052^{(2010.01)}$
$H01M\ 4/02^{(2006.01)}$

(52) Cooperative Patent Classification (CPC):
**C30B 29/22; H01M 4/02; H01M 4/131; H01M 4/505;**
**H01M 4/525; H01M 10/052;** Y02E 60/10

(86) International application number:
**PCT/KR2023/021402**

(87) International publication number:
**WO 2024/144141 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.12.2022  KR 20220184962**

(71) Applicant: **LG Energy Solution, Ltd.**
**Seoul 07335 (KR)**

(72) Inventors:
• **KWAK, Min**
  **Daejeon 34122 (KR)**
• **KIM, Hyeong Il**
  **Daejeon 34122 (KR)**
• **CHAE, Seul Ki**
  **Daejeon 34122 (KR)**
• **PARK, Byung Chun**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, AND POSITIVE ELECTRODE AND LITHIUM SECONDARY BATTERY COMPRISING SAME**

(57)    The present invention relates to a positive electrode active material including: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, and wherein the lithium nickel-based transition metal oxide with a large particle diameter has a $D_{50}$ of 5 $\mu m$ to 30 $\mu m$, a Z value defined by factors of roundness distribution characteristics of 1.0 to 9.0, and a negative skewness factor (NSF) of 0.1 to 0.9. The positive electrode active material is applied to a positive electrode to provide a lithium secondary battery in which the breakage of the positive electrode active material particles is suppressed, thereby improving lifespan and output characteristics and reducing the amount of gas generated.

EP 4 560 734 A1

**Description**

## TECHNICAL FIELD

## CROSS-REFERENCE TO RELATED APPLICATIONS

This application claims the benefit of priority to Korean Patent Application No. 10-2022-0184962 filed on December 26, 2022, the disclosure of which is incorporated herein by reference in its entirety.

## TECHNICAL FIELD

The present invention relates to a positive electrode active material for a lithium secondary battery, and a positive electrode and a lithium secondary battery including the same.

## BACKGROUND ART

A lithium secondary battery is generally composed of a positive electrode, a negative electrode, a separator, and an electrolyte, wherein the positive electrode and the negative electrode include an active material capable of intercalating and deintercalating lithium ions.

As a positive electrode active material for the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), etc. have been used. Among them, the lithium cobalt oxide has the advantages of high operating voltage and excellent capacity characteristics, but the price of cobalt, which is a raw material, is high and its supply is unstable, making it difficult to commercially apply it to a large-capacity battery. The lithium nickel oxide has poor structural stability, making it difficult to achieve sufficient lifespan characteristics. Meanwhile, the lithium manganese oxide has excellent stability, but has a problem of poor capacity characteristics. Therefore, in order to compensate for the problems of the lithium transition metal oxides containing Ni, Co, or Mn alone, lithium nickel-based transition metal oxides containing two or more transition metals have been developed, and in particular, a lithium nickel cobalt manganese oxide containing Ni, Co, and Mn are widely used in the field of electric vehicle batteries.

Conventional lithium nickel cobalt manganese oxide was generally in the form of a spherical secondary particle in which tens to hundreds of primary particles are aggregated. However, in the case of the lithium nickel cobalt manganese oxide in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particle breakage or cracks of the positive electrode active material are generated, the contact area with an electrolyte increases, which increases generation of gas and deterioration of the active material due to side reactions with the electrolyte, thereby degrading lifespan characteristics.

## DISCLOSURE OF THE INVENTION

## TECHNICAL PROBLEM

The present invention is intended to solve the above problems and provide a positive electrode active material that can suppress particle breakage and cracks during the electrode manufacturing and charging/discharging process, and has excellent rolling density.

In addition, the present invention is to provide a positive electrode and a lithium secondary battery which include the above positive electrode active material, thereby having a low crack rate and thus reduced side reactions with an electrolyte, which lead to improved high temperature lifespan, output, and high temperature storage characteristics.

## TECHNICAL SOLUTION

In order to solve the above problems, according to one aspect of the present invention, there is provided a positive electrode active material including: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, and wherein the lithium nickel-based transition metal oxide with a large particle diameter has a D50 of 5 $\mu$m to 30 $\mu$m, a Z value defined by Equation 1 below of 1.0 to 9.0, and a negative skewness factor (NSF) defined by Equation 2 below of 0.1 to 0.9.

$$[\text{Equation 1}]$$

$$Z = F^R max \ / \ S^R$$

wherein the $F^R max$ and $S^R$ are values obtained when drawing a histogram with the number of particles as a frequency by dividing the degree of roundness into 0.05 units in a roundness dispersion obtained from a scanning electron microscope (SEM) and an image analysis program for the lithium nickel-based transition metal oxide with a large particle diameter, wherein the $F^R max$ is the maximum frequency roundness ratio (mode roundness ratio), which is the frequency of the class (roundness) with the highest frequency (number of particles) divided by the total number of analyzed particles, and SR is the standard deviation of the roundness.

$$[\text{Equation 2}]$$

$$NSF = (R_{50} - R_{10}) \ / \ F^R max$$

wherein the $F^R max$, $R_{50}$ and $R_{10}$ are values obtained when drawing a histogram with the number of particles as a frequency by dividing the degree of roundness into 0.05 units in a roundness dispersion obtained from a scanning electron microscope (SEM) and an image analysis program for the lithium nickel-based transition metal oxide with a large particle diameter, wherein the $F^R max$ is the maximum frequency roundness ratio (mode roundness ratio), which is the frequency of the class (roundness) with the highest frequency (number of particles) divided by the total number of analyzed particles, $R_{50}$ is a roundness at a point with a cumulative frequency of 50%, and $R_{10}$ is a roundness at a point with a cumulative frequency of 10%.

In order to solve the above problems, according to another aspect of the present invention, there is provided a positive electrode including the positive electrode active material according to the present invention.

In order to solve the above problems, according to still another aspect of the present invention, there is provided a lithium secondary battery including the positive electrode according to the present invention

## ADVANTAGEOUS EFFECTS

The positive electrode active material for a lithium secondary battery according to the present invention includes a lithium nickel-based transition metal oxide in the form of a single particle and/or a quasi-single particle with excellent particle strength, and a lithium nickel-based transition metal oxide in the form of a secondary particle that is an aggregate of primary particles satisfying specific particle size and roundness characteristics, thereby reducing the occurrence of particle breakage or cracks caused by rolling when manufacturing the electrode, and achieving an excellent level of rolling density.

In addition, in the positive electrode active material for a lithium secondary battery according to the present invention, particle breakage can be minimized, thereby reducing side reactions with the electrolyte and thus the amount of gas generated. Further, changes in the crystal structure can be minimized during the charging and discharging process, thereby suppressing the deterioration of the positive electrode active material, and thus improving high-temperature lifespan characteristics and high-temperature storage characteristics. Moreover, the output characteristics can be excellent due to a low resistance increase rate.

## MODE FOR CARRYING OUT THE INVENTION

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In the present disclosure, a "single particle" is a particle formed of a single nodule. In the present disclosure, the "nodule" refers to a particle unit that may be a single crystal lacking a crystalline grain boundary, or a polycrystal with no apparent grain boundary when observed at a field of view of 5,000 to 20,000 times using a scanning electron microscope (SEM). In the present disclosure, a "quasi-single particle" refers to a particle that is a composite formed of 30 or less nodules.

In the present disclosure, a "secondary particle" refers to a particle formed by agglomerating tens to hundreds of primary particles. More specifically, the secondary particle is an agglomerate of 50 primary particles or more.

The term "particle" used in the present disclosure may include any one or all of a single particle, a quasi-single particle, a primary particle, a nodule, and a secondary particle.

In the present disclosure, a "$D_{50}$" refers to a particle size based on 50% of a volume cumulative particle size distribution of a positive electrode active material powder. The average particle diameter (or median particle diameter) $D_{50}$ can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

In the present invention, "aspect ratio" and "roundness" are values derived from the minimum particle diameter ($D_{min}$, short diameter), maximum particle diameter ($D_{max}$, long diameter), and area of the particles through an image analysis program for a two-dimensional image of particles obtained using an image of positive electrode active material particle through scanning electron microscope (SEM). These values refer to the average value of tens to hundreds of particles, preferably 300 particles in the present invention, and are specifically calculated through the following Equations A and B:

$$[\text{Equation A}]$$

$$\text{Aspect Ratio} = D_{min}/D_{max}$$

$$[\text{Equation B}]$$

$$\text{Roundness} = (4 \times \text{area}) / (\pi \times (D_{max})^2)$$

In addition, since the roundness in this specification is a value derived from a scanning electron microscope image, it is not substantially different from the meaning of 'circularity'. However, the value analyzed as the circularity in image analysis is expressed as the roundness in consideration of the fact that the positive electrode active material particles are three-dimensional particles.

Hereinafter, the present invention will be described in more detail.

**Positive Electrode Active Material**

A positive electrode active material according to the first embodiment of the present invention includes: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, and wherein the lithium nickel-based transition metal oxide with a large particle diameter has a $D_{50}$ of 5 $\mu$m to 30 $\mu$m, a Z value defined by Equation 1 below of 1.0 to 9.0, and a negative skewness factor (NSF) defined by Equation 2 below of 0.1 to 0.9.

$$[\text{Equation 1}]$$

$$Z = F^R_{max} / S^R$$

wherein the $F^R$max and $S^{R\text{-}}$ are values obtained when drawing a histogram with the number of particles as a frequency by dividing the degree of roundness into 0.05 units in a roundness dispersion obtained from a scanning electron microscope (SEM) and an image analysis program for the lithium nickel-based transition metal oxide with a large particle diameter, wherein the $F^R$max is the maximum frequency roundness ratio (mode roundness ratio), which is the frequency of the class (roundness) with the highest frequency (number of particles) divided by the total number of analyzed particles, and $S^R$ is the standard deviation of the roundness.

[Equation 2]

$$NSF = (R_{50} - R_{10}) / F^R_{max}$$

wherein the $F^R_{max}$, $R_{50}$ and $R_{10}$ are values obtained when drawing a histogram with the number of particles as a frequency by dividing the degree of roundness into 0.05 units in a roundness dispersion obtained from a scanning electron microscope (SEM) and an image analysis program for the lithium nickel-based transition metal oxide with a large particle diameter, wherein the $F^R$max is the maximum frequency roundness ratio (mode roundness ratio), which is the frequency of the class (roundness) with the highest frequency (number of particles) divided by the total number of analyzed particles, $R_{50}$ is a roundness at a point with a cumulative frequency of 50%, and $R_{10}$ is a roundness at a point with a cumulative frequency of 10%.

Meanwhile, the roundness of the positive electrode active material particles affects how easily the particles are broken, and may also affect the particle filling ability because the particle arrangement structure may vary depending on the roundness. In general, as the roundness increases, that is, as the particles are closer to a spherical shape, damage to the particles may be reduced, but being closer to the spherical particles may be more disadvantageous in terms of the filling ability of the particles.

Accordingly, the present invention proposes a roundness characteristic of particles capable of improving electrode performance due to small particle breakage while improving energy density without damaging particles even at a high rolling density.

According to one embodiment, the large-particle-diameter lithium nickel-based transition metal oxide has a $D_{50}$ of 5 $\mu$m to 30 $\mu$m, and may preferably have a $D_{50}$ of 7 $\mu$m or more, 8 $\mu$m or more, 10 $\mu$m or more, or 11 $\mu$m or more, and 27 $\mu$m or less, 25 $\mu$m or less, 23 $\mu$m or less, 21 $\mu$m or less, or 20 $\mu$m or less. When the $D_{50}$ satisfies the above range, the possibility of side reactions and gas generation due to particle breakage, and problems of capacity and output characteristics due to increased energy density and resistance can be prevented.

According to one embodiment, a histogram of the roundness dispersion is obtained for the lithium nickel-based transition metal oxide having a large particle diameter, and the Z value and NSF value may be defined through the values obtained from this distribution. Specifically, the Z value is defined as the ratio of the 'maximum frequency roundness ratio', which is a value indicating the proportion of the most distributed roundness to the entire roundness value, to the standard deviation of the roundness. This value may mean that the smaller it is, the more likely it is to show advantageous performance. Specifically, the larger the standard deviation, the smaller the maximum frequency roundness ratio, the more the particle breakage can be reduced even at a high rolling density. However, even in this case, if the standard deviation is too small or the maximum frequency roundness proportion is too large, there may be a problem that the filling of the particles is unlikely to be dense and the energy density can be lowered, so they need to be controlled at the appropriate value.

According to one embodiment, the Z value on the roundness distribution histogram of the lithium nickel-based transition metal oxide with a large particle diameter may be 1.0 to 9.0, preferably 1.5 to 8.5. More preferably, the lower limit may be 1.7 or more, 2.0 or more, or 2.5 or more, and the upper limit may be 8.0 or less, 7.5 or less, or 7.0 or less. When the Z value satisfies the above range, the particle shape can be optimized, and thus particle breakage is reduced to reduce the possibility of side reactions, thereby preventing a decrease in lifespan or output.

In addition, the lithium nickel-based transition metal oxide with a large particle diameter may have a negative skewness factor (NSF) defined by Equation 3 above of 0.1 to 0.9.

The negative skewness coefficient of the roundness is intended to take into consideration that the performance may not be realized simply by satisfying the values of the standard deviation and maximum frequency roundness ratio on the roundness distribution histogram, and if there are many particles with too low roundness, particle breakage is more likely to occur. This means that it can be evaluated as desirable that the graph shows a tendency to shift to the right. In other words, when the peak is shifted to the right at an appropriate level, the volume fraction increases at a side with a higher roundness, thereby resulting in the effect of obtaining stable properties in terms of particle strength and amount of fine powder generated. Accordingly, preferably, the negative skewness coefficient may be 0.15 or more, 0.2 or more, or 0.25 or more, and 0.8 or less, 0.7 or less, or 0.6 or less.

In addition, according to one embodiment, the standard deviation ($S^R$) of the roundness may be 0.05 to 0.2, preferably 0.06 or more, and may also be 0.15 or less, 0.13 or less, or 0.1 or less. In addition, the maximum frequency roundness ratio ($F^R_{max}$) may be 0.1 to 0.5, preferably 0.15 or more, 0.20 or more, or 0.22 or more, and may also be 0.45 or less, 0.40 or less, or 0.35 or less.

A positive electrode active material according to the second embodiment of the present invention includes: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, and wherein the lithium nickel-based transition metal oxide with a large particle diameter has a $D_{50}$ of 5 $\mu$m to 30 $\mu$m, and a Y value defined by the following Equation 3 of 2.2 or less:

$$[\text{Equation 3}]$$

$$Y = I^{D}_{max} / (D_{FWHM} \times R_{L})$$

wherein the $I^{D}_{max}$ and $D_{FWHM}$ are values obtained from a volume cumulative particle size distribution graph obtained from particle size analysis (PSD) of the lithium nickel-based transition metal oxide with a large particle diameter, wherein the $D_{FWHM}$ is a full width at half maximum (FWHM) of a peak, and $I^{D}_{max}$ is a maximum value of a peak; and the $R_{L}$ refers to a weight fraction of the lithium nickel-based transition metal oxide with a large particle diameter among the total positive electrode active material, and is a rational number greater than 0 and less than 1, wherein the $I^{D}_{max}$, $D_{FWHM}$ and $R_{L}$ are dimensionless numbers having no unit.

The present inventors have proposed particle characteristics that could take both advantages in terms of the active material particle breakage and energy density by mixing a large-particle-diameter lithium nickel-based transition metal oxide in the form of a secondary particle having an advantage in terms of energy density, and a small-particle-diameter lithium nickel-based transition metal oxide in the form of a single particle and/or a quasi-single particle having reduced particle breakage.

According to an embodiment, in the lithium nickel-based transition metal oxide with a large particle diameter, a $D_{50}$ is 5 $\mu$m to 30 $\mu$m, and in a volume cumulative particle size distribution graph obtained from particle size analysis (PSD) of the lithium nickel-based transition metal oxide with a large particle diameter, a ratio ($I^{D}_{max}/D_{FWHM}$) of a maximum value of a peak ($I^{D}_{max}$) to a full width at half maximum of a peak ($D_{FWHM}$) is 2.20 or less.

The volume cumulative particle size distribution graph can be measured using a laser diffraction method. For example, the volume cumulative particle size distribution graph can be obtained by dispersing the lithium nickel-based transition metal oxide powder in a dispersion medium, introducing it into a commercially available laser diffraction particle size measurement device (e.g., Microtrac MT 3000), and irradiating an ultrasonic wave of about 28 kHz with an output of 60 W. Through this graph, the $D_{50}$ can be measured by obtaining a particle size corresponding to 50% of the volume accumulative amount, and the maximum value ($I^{D}_{max}$), full width at half maximum ($D_{FWHM}$) of a peak, and a ratio thereof may be obtained.

The $D_{50}$ of the large-particle-diameter lithium nickel-based transition metal oxide may be preferably 7 $\mu$m or more, 8 $\mu$m or more, 10 $\mu$m or more, or 11 $\mu$m or more, and 27 $\mu$m or less, 25 $\mu$m or less, 23 $\mu$m or less, 21 $\mu$m or less, or 20 $\mu$m or less. When the $D_{50}$ satisfies the above range, the possibility of side reactions and gas generation due to particle breakage, and problems of capacity and output characteristics due to increased energy density and resistance can be prevented.

In general, the energy density of the positive electrode can be determined by how the positive electrode active material particles are arranged according to their particle size characteristics in the positive electrode active material layer, and thus, can be determined depending on how high the rolling density can be increased without damaging the particles by withstanding high rolling pressure. In order to prevent particle breakage even under high rolling pressure and minimize porosity, the strength of the particles must be high, and it is also important how well the small-diameter particles are placed between the large-diameter particles. Depending on the ratio of large particle size and small particle size particles, whether the particle size distribution of each particle is wide or narrow, and which particle diameter the particles are most distributed in even if the average particle size is the same, the arrangement of the particles may vary, and their ability to withstand high rolling pressures may differ accordingly.

In view of this relationship, the Y value is defined in the present invention, considering that in a positive electrode active material with a bimodal distribution, the large-particle-diameter lithium nickel-based transition metal oxides, especially particles in the form of a secondary particle, have particle size characteristics that greatly affect the arrangement of the particles, and have weaker strength than the small-particle-diameter lithium nickel-based transition metal oxide in the form of a single particle or a quasi-single particle, and thus are prone to particle breakage.

According to one example, the Y value can be obtained from the full width at half maximum and maximum values of the peak obtained from the volume cumulative particle size distribution graph of the lithium nickel-based transition metal oxide with a large particle diameter, and the weight ratio of the large-particle-diameter lithium nickel-based transition metal oxide in the total positive electrode active material. The smaller the value, the better the energy density of the positive electrode; the smaller the maximum value compared to the full width at half maximum of the peak, the better the energy density; and the smaller the ratio of large-particle-diameter particles, the more advantageous it may be. In other words, it can be said to be a particle size characteristic that can realize the better performance when the particle size distribution of the large particle-diameter particles is wider and the ratio of particles corresponding to the average particle diameter is smaller. However, when the ratio of the maximum value compared to the full width at half maximum of the peak is too small or the ratio of large-diameter particles is too small, a bimodal distribution cannot be shown, and as a result, the rolling density may be determined depending on the particle size distribution of the small-diameter particles, so the Y value needs to be controlled accordingly.

For example, the Y value may be 2.2 or less, preferably 0.5 to 2.2. More preferably, the lower limit may be 0.7 or more, 0.8 or more, or 1.0 or more, and the upper limit may be 2.1 or less, 2.0 or less, 1.9 or less, 1.8 or less, or 1.7 or less.

As described above, the Y value may reflect the effect of the ratio of the maximum value to the full width at half maximum of the peak on the particle size characteristics of the large-diameter particles in the mixed active material. If the Y value is less than 0.5, the peak width is relatively wide and the maximum value is small, whereby the ratio of large particles with a large particle size to small particles with a small particle size is high even within the large-particle-diameter particles, which may cause a problem in the durability of the electrode. Additionally, this may be combined with the particle size distribution of the small-diameter lithium nickel-based transition metal oxide, resulting in a particle size distribution shifted from a bimodal distribution to a monomodal distribution. In this case, the movement path of lithium may be adversely affected, and particle breakage may occur during rolling because the ratio of large-diameter particles may be relatively high. When the ratio is greater than 2.2, the peak width is relatively narrow and the maximum value is large, whereby the ratio of large-diameter particles is relatively small, and the arrangement structure of the particles is poor, so the porosity may increase, thereby lowering the energy density. Accordingly, in order to suppress problems such as energy density and gas generation, it is necessary to control particle size characteristics to satisfy the above range.

According to one embodiment, the $R_L$ may be 0.4 to 0.9, and the Y value may be meaningful when the proportion of large-diameter particles included is in the range of about 40% to 90% by weight, and preferably 45 wt% or more, 50 wt% or more, or 55 wt% or more.

According to one embodiment, the $I^D_{max}/D_{FWHM}$ may be 0.5 to 3.0. It is preferable that the ratio of the maximum value to the full width at half maximum is small, but it should be greater than 0.5 to realize high rolling pressure in a positive electrode active material with a bimodal particle size distribution, and may be preferably less than 3.0. More preferably, it may be 0.6 or more, 0.7 or more, and 2.5 or less, 2.0 or less, 1.5 or less, or 1.3 or less.

According to the first and second embodiments of the present invention, the positive electrode active material including the large-diameter lithium nickel-based transition metal oxide and the small-diameter lithium nickel-based transition metal oxide may have an aspect ratio of 0.60 to 0.99 and a roundness of 0.60 to 0.99. Here, the aspect ratio and roundness may be values obtained by using an image analysis program for an image obtained by photographing positive electrode active material particles with a scanning electron microscope, and may be an average value of about 300 or more particles.

The positive electrode active material may have an aspect ratio of 0.65 or more, 0.70 or more, 0.75 or more, 0.78 or more, or 0.80 or more, and 0.98 or less. Additionally, the circularity may be 0.65 or more, 0.70 or more, 0.75 or more, 0.78 or more, or 0.80 or more, and 0.98 or less. When the aspect ratio and roundness of the positive electrode active material satisfy the above ranges, the particle characteristics of the mixed active material can be more easily controlled, thereby improving performance.

According to the first and second embodiments of the present invention, a mixing weight ratio of the large-diameter lithium nickel-based transition metal oxide to the small-diameter lithium nickel-based transition metal oxide may be 90:10 to 30:70. Preferably, it may be 85:15 or less, or 80:20 or less, and 35:75 or more, 40:60 or more, 50:50 or more, or 60:40 or more. If the mixing range is satisfied, particle breakage can be alleviated, and a rolling density can be improved.

Meanwhile, the positive electrode active material according to the first and second embodiments of the present invention may include large-diameter and small-diameter lithium nickel-based transition metal oxides, and each of them may independently include a lithium nickel-based transition metal oxide having a composition shown in Chemical Formula 1 below:

[Chemical Formula 1] $\qquad$ $Li_{1+x}Ni_aCo_bM^1_cM^2_dO_{2-e}X_e$

wherein $M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $-0.1 \leq x \leq 0.5$, $0.5 \leq a < 1$, $0 < b \leq 0.4$, $0 < c \leq 0.4$, $0 \leq d \leq 0.05$, and $0 \leq e \leq 0.05$.

In Formula 1 above, $M^1$ is Mn, Al or a combination thereof, preferably Mn, or a combination of Mn and Al; and $M^2$ may be at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The $M^2$ element is not necessarily included, but when included in an appropriate amount, it can play a role in promoting grain growth during calcination or improving crystal structure stability. In addition, X is an anion substituted for the oxygen site and may include N, P, S, F, or Cl.

The $1+x$ represents a molar ratio of lithium in the lithium nickel-based transition metal oxide, and may be $-0.10 \leq x \leq 0.30$, $-0.10 \leq x \leq 0.20$, or $-0.10 \leq x \leq 0.15$.

The a represents a molar ratio of nickel among all metals except lithium in the lithium nickel-based transition metal oxide, and may be $0.60 \leq a < 1.00$, $0.70 \leq a < 1.00$, $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$.

Here, the value a, that is, the content of nickel in the transition metal may be 60 mol% or more, preferably 70 mol% or more, or 75 mol% or more. The higher the nickel content and the lower the cobalt content, the more problematic the amount of gas generated and the capacity retention rate may be. However, when the roundness characteristic and/or the particle size characteristic are satisfied, the particle breakage can be reduced and the rolling density can be increased, thereby resulting in a little more synergy in that the positive electrode active material with a high nickel content has high capacity and high output characteristics, but the disadvantages can be offset.

The b represents a molar ratio of cobalt among all metals excluding lithium in the lithium nickel-based transition metal oxide, and may be $0<b<0.30$, $0.001 \leq b<0.25$, $0.001 \leq b<0.20$, or $0.001 \leq b \leq 0.15$.

The c represents a molar ratio of $M^1$ among all metals excluding lithium in the lithium nickel-based transition metal oxide, and may be $0<c<0.30$, $0.01 \leq c<0.25$, $0.01 \leq c<0.20$, or $0.01 \leq c \leq 0.15$.

The d represents a molar ratio of $M^2$ element among all metals excluding lithium in the lithium nickel-based transition metal oxide, and may be $0 \leq d \leq 0.05$, $0 \leq d \leq 0.02$ or $0 \leq d \leq 0.01$.

The e represents a molar ratio of element X among all non-metals excluding oxygen in the lithium nickel-based transition metal oxide, and may be $0 \leq e \leq 0.05$, $0 \leq e \leq 0.02$ or $0 \leq e \leq 0.01$.

Meanwhile, the lithium nickel-based transition metal oxide may further include, on the surface of the particle, a coating layer containing one or more coating elements selected from the group consisting of Al, Ti, W, B, F, P, Mg, Ni, Co, Fe, Cr, V, Cu, Ca, Zn, Zr, Nb. Mo, Sr, Sb, Bi, Si and S.

When the coating layer is present on the surface of the lithium nickel-based transition metal oxide particle, the contact between the electrolyte and the lithium nickel-based transition metal oxide can be suppressed by the coating layer, thereby having the effect of reducing transition metal elution or gas generation due to side reactions with the electrolyte.

Preferably, the coating layer may include Co as a coating element. When the coating layer containing Co is formed on the surface of the lithium nickel-based transition metal oxide particle in the form of a single particle and/or a quasi-single particle, an effect of improving output can be obtained along with an effect of suppressing side reactions with the electrolyte.

The positive electrode active material according to the third embodiment of the present invention is characterized by including both the characteristics of the positive active material according to the first embodiment and the positive electrode active material according to the second embodiment.

In this case, in the positive electrode active material in which large-particle-diameter and small-particle-diameter particles having bimodal particle size characteristics are mixed, only particles with precisely controlled particle size and roundness characteristics can be applied, so that the rolling density can be improved by withstanding high rolling pressure without particle breakage. As a result, it is possible to implement a high-energy-density positive electrode in which the resistance increase rate can be minimized and the lifespan can also be improved by reducing the fine powder generated.

## Method of Manufacturing Positive Electrode Active Material

Next, a method of manufacturing the positive electrode active material of the present invention will be described.

The method of manufacturing the positive electrode active material according to the present invention includes the steps of: (S1) preparing a positive electrode active material precursor by adding a transition metal-containing solution containing cations of nickel (Ni), cobalt (Co) and $M^1$, a basic aqueous solution, and an ammonium solution and performing a coprecipitation reaction; and (S2) preparing a positive electrode active material by mixing the positive electrode active material precursor and a lithium raw material and heat-treating them.

In addition, through the condition of the coprecipitation reaction and the firing conditions such as the firing temperature and time of the lithium raw material and precursor, the manufactured positive electrode active material may be in the form of a single particle formed of one nodule or a quasi-single particle that is a composite of 30 or less nodules, or in the form of a secondary particle that is an aggregate of primary particles. The positive electrode active material according to the present invention can be obtained by preparing a large-diameter lithium nickel-based transition metal oxide and a small-diameter lithium nickel-based transition metal oxide separately and then mixing them, or by firing each of them and then mixing them to perform coating.

Hereinafter, each step of the method of manufacturing the positive electrode active material will be described in detail.

First, the transition metal-containing solution containing cations of nickel (Ni), cobalt (Co), and $M^1$ is prepared. For example, the transition metal-containing solution may include a nickel-containing raw material, a cobalt-containing raw material, and an $M^1$-containing raw material, wherein the $M^1$-containing raw material may be a manganese-containing raw material and/or an aluminum-containing raw material.

Thereafter, the positive electrode active material precursor can be prepared by adding an ammonium cation-containing complex forming agent and a basic aqueous solution to the transition metal solution and performing a coprecipitation reaction.

The nickel-containing raw material may be, for example, a nickel-containing acetate, nitrate, sulfate, halide, sulfide, hydroxide, oxide, oxyhydroxide, or the like, and specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, fatty acid nickel salt, nickel halide, or a combination thereof, but is not limited thereto.

The cobalt-containing raw material may be a cobalt-containing acetate, nitrate, sulfate, halide, sulfide, hydroxide, oxide, oxyhydroxide, or the like, and specifically, $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but is not limited thereto.

The manganese-containing raw material may be, for example, a manganese-containing acetate, nitrate, sulfate, halide, sulfide, hydroxide, oxide, oxyhydroxide, or a combination thereof, and specifically, a manganese oxide such as $Mn_2O_3$, $MnO_2$, $Mn_3O_4$, etc.; a manganese salt such as $MnCO_3$, $Mn(NO_3)_2$, $MnSO_4$, manganese acetate, dicarboxylic acid manganese salt, manganese citrate, fatty acid manganese salt; a manganese oxyhydroxide, manganese chloride, or a combination thereof, but is not limited thereto.

The aluminum-containing raw material may be, for example, $Al_2O_3$, $Al(OH)_3$, $Al(NO_3)_3$, $A_2(SO_4)_3$, $(HO)_2AlCH_3CO_2$, $HOAl(CH_3CO_2)_2$, $Al(CH_3CO_2)_3$, aluminum halides, or a combination thereof.

The transition metal-containing solution can be prepared by adding the nickel-containing raw material, cobalt-containing raw material, and $M^1$-containing raw material to a solvent, specifically water, or a mixed solvent of water and organic solvents (e.g. alcohol, etc.) that can be mixed uniformly with water, or by mixing an aqueous solution of the nickel-containing raw material, an aqueous solution of the cobalt-containing raw material, and the $M^1$-containing raw material.

The ammonium cation-containing complex forming agent may be, for example, $NH_4OH$, $(NH_4)_2SO_4$, $NH_4NO_3$, $NH_4Cl$, $CH_3COONH_4$, $NH_4CO_3$, or a combination thereof, but is not limited thereto. Meanwhile, the ammonium cation-containing complex former may be used in the form of an aqueous solution, wherein the solvent may be water, or a mixture of water and an organic solvent (specifically, alcohol, etc.) that is uniformly miscible with water.

The basic compound may be a hydroxide of an alkali metal or alkaline earth metal, such as $NaOH$, $KOH$, or $Ca(OH)_2$, a hydrate thereof, or a combination thereof. The basic compound may also be used in the form of an aqueous solution, wherein the solvent may be water, or a mixture of water and an organic solvent (specifically, alcohol, etc.) that is uniformly miscible with water.

The basic compound is added to adjust the pH of the reaction solution, and may be added in an amount such that the pH of the metal solution is 8 to 12.

The coprecipitation reaction may be performed at a temperature ranging from 35°C to 80°C under an inert atmosphere such as nitrogen or argon.

Accordingly, the positive electrode active material precursor containing cations of nickel, cobalt, and $M^1$ can be prepared.

Through the above process, positive electrode active material precursor particles of nickel-cobalt-$M^1$ hydroxide are produced and precipitated in the reaction solution. By controlling the concentrations of the nickel-containing raw material, cobalt-containing raw material and $M^1$-containing raw material, the positive electrode active material precursor can be prepared in which the nickel (Ni) content of the total metal content is 70 mol% or more, 75 mol% or more, preferably 80 mol% or more, more preferably 82 mol% or more. The precipitated positive electrode active material precursor particles can be separated and dried according to a conventional method to produce the positive electrode active material precursor.

Thereafter, the positive electrode active material precursor and the lithium raw material are mixed, and heat treated.

The lithium raw material may be lithium-containing sulfate, nitrate, acetate, carbonate, oxalate, citrate, halide, hydroxide, or oxyhydroxide, but is not particularly limited as long as it is soluble in water. Specifically, the lithium raw material may be $Li_2CO_3$, $LiNO_3$, $LiNO_2$, $LiOH$, $LiOH. H_2O$, $LiH$, $LiF$, $LiCl$, $LiBr$, $LiI$, $CH_3COOLi$, $Li_2O$, $Li_2SO4$, $CH_3COOLi$, or $Li_3C_6H_5O_7$, and any one or a mixture of two or more thereof may be used.

The positive electrode active material precursor and the lithium raw material may be mixed at a molar ratio of 1:1 to 1:1.30. The positive electrode active material precursor and the lithium raw material may be mixed, for example, at a molar ratio of about 1:1, about 1:1.05, about 1:1.07, about 1:1.10, about 1:1.5, about 1:1.20, or about 1:1.30, but are not limited thereto.

The heat treatment may be performed at a temperature ranging from 630°C to 1000°C in the case of a high-Ni NCM-based lithium composite transition metal oxide with a nickel (Ni) content of 70 mol% or more. The heat treatment may be preferably performed, for example, at a temperature ranging from 630°C to 925°C, and more preferably at a temperature ranging from 630°C to 910°C. The formation of the positive electrode active material powder in the form of a single particle and/or quasi-single particle is influenced by the conditions of heat treatment temperature.

Accordingly, the manufactured positive electrode active material can have reduced particle breakage and strain in the crystal structure during the rolling process or charging and discharging of a lithium secondary battery including the same, and can have improved initial resistance characteristics.

The heat treatment may be performed under an air or oxygen atmosphere, for example, for 4 to 12 hours. Specifically, the heat treatment may be performed, for example, for 4 hours or more, 6 hours or more, 8 hours or more, 10 hours or more, and for 12 hours or less, 10 hours or less, 8 hours or less, and 6 hours or less.

Meanwhile, when the lithium nickel-based transition metal oxide containing $M^2$ metal is to be prepared, or when the lithium nickel-based transition metal oxide containing a non-metal for anion substitution at an oxygen sites such as X is to be prepared, an $M^2$ metal-containing raw material and/or an X element-containing raw material may be additionally mixed during the coprecipitation reaction or in the firing step. In this case, the $M^2$ metal-containing raw material may be an acetate, carbonate, nitrate, sulfate, halide, sulfide, or oxide of the $M^2$ metal, and the X element-containing raw material may be a lithium salt of X or an acid containing X.

On the other hand, when it is desired to form a coating layer on the surface of the lithium nickel-based transition metal oxide, after the above heat treatment, a step of mixing the lithium nickel-based transition metal oxide prepared through the heat treatment and the coating raw material and then heat treating them may be further performed. In this case, the mixing may be accomplished by solid-phase mixing or liquid-phase mixing, and the heat treatment may be performed at an appropriate temperature depending on the coating raw material. For example, the heat treatment of the coating process may be performed at a temperature ranging from 200°C to 700°C, or 300°C to 600°C, but is not limited thereto.

Additionally, when manufacturing the positive electrode active material powder of the present invention, it is preferable not to perform a water washing process after the heat treatment. Conventionally, when manufacturing high-nickel (Ni) NCM-based lithium composite transition metal oxides, it was common to perform a water washing process after heat treatment to reduce the lithium by-product content. However, according to the present inventors' research, it has been found that when a water washing process is performed in the production of the lithium nickel-based transition metal oxide in the form of a single particle and/or a quasi-single particle, the surface properties of the lithium nickel-based transition metal oxide deteriorate during the water washing process, and thus the resistance is increased. Therefore, when manufacturing the positive electrode active material powder of the present invention, it is preferable not to perform water washing, but to consume the remaining lithium on the surface of the lithium nickel-based transition metal oxide through the coating layer formation process. In this way, when the positive electrode active material is manufactured without washing the lithium nickel-based transition metal oxide, an increase in resistance due to surface defects can be suppressed.

The positive electrode active material according to the first to third embodiments of the present invention can be manufactured according to the above-described manufacturing method. During the production, the particle size distribution or roundness distribution can be adjusted by controlling the conditions in a coprecipitation reaction or a firing reaction. After the reactions are completed, the distributions can be controlled through a pulverization process and/or a classification process.

**Positive Electrode**

The positive electrode according to the present invention includes the positive electrode active material of the present invention described above. Specifically, the positive electrode includes a positive electrode current collector and a positive electrode active material layer formed on the positive electrode current collector, wherein the positive electrode active material layer includes the positive electrode active material powder according to the present invention. Since the positive electrode active material powder has been described above, a detailed description thereof will be omitted, and only the remaining components will be described in detail below.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, heat-treated carbon, or aluminum or stainless steel having a surface treated with carbon, nickel, titanium, silver, etc. Additionally, the positive electrode current collector may typically have a thickness of 3 to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material powder, may optionally include a conductive material and a binder, if necessary.

In this case, the positive electrode active material powder may be included in an amount of 80% to 99% by weight, more specifically 85% to 98.5% by weight, based on the total weight of the positive electrode active material layer, and can exhibit excellent capacity characteristics when included in the above content range.

The conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 0.1 to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1 to 15% by weight based on the total weight of the positive electrode active material layer.

The positive electrode may be manufactured according to a conventional positive electrode manufacturing method except for the use of the positive electrode active material powder described above. Specifically, the above positive electrode active material powder and, if necessary, a binder, a conductive material, and a dispersant are dissolved or dispersed in a solvent to prepare a positive electrode slurry composition. This slurry composition can be applied on a positive electrode current collector, and then dried and rolled to produce a positive electrode.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder and dispersant in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the positive electrode slurry composition on a separate support, peeling a film from the support, and then laminating the film on a positive electrode current collector.

## Electrochemical Device

Next, an electrochemical device according to the present invention will be described. The electrochemical device according to the present invention includes the positive electrode of the present invention described above. Specifically, the electrochemical device may be a battery, a capacitor, etc., and more specifically, a lithium secondary battery.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, heat-treated carbon, copper or stainless steel that is surface-treated with carbon, nickel, titanium, silver, or the like, an aluminum-cadmium alloy, or the like. Additionally, the negative electrode current collector may typically have a thickness of 3 to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ (0<$\beta$<2), $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80% to 99% by weight based on the total weight of the negative electrode active material layer.

The binder is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide whisker and potassium titanate whisker; conductive metal oxides such as titanium oxide; conductive materials such as polyphenylene derivatives.

The negative electrode active material and optionally a binder and a conductive material are dissolved or dispersed in a solvent to prepare a negative electrode slurry composition, which may be applied on a negative electrode current collector and dried to produce a negative electrode active material layer. Alternatively, the negative electrode active material layer may be manufactured by casting the negative electrode slurry composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

## Example

Hereinafter, examples of the present invention will be described in detail so that those skilled in the art can easily implement the present invention. However, the present invention may be embodied in a variety of forms and is not limited to the examples described herein.

### Example 1

A large-particle-diameter lithium nickel-based transition metal oxide was prepared, which has a Ni:Co:Mn molar ratio of 8:1:1, is a secondary particle powder which is an aggregate of primary particles, and has an average particle diameter $D_{50}$ of 12.0 $\mu$m, and roundness dispersion characteristics as described in Table 4 below. A small-particle-diameter lithium nickel-based transition metal oxide was prepared, which has a Ni:Co:Mn molar ratio of 8:1:1, is a powder of single particles and quasi-single particles, and has an average particle diameter $D_{50}$ of 3.5 $\mu$m. The large-particle-diameter and small-particle-diameter lithium nickel-based transition metal oxides were mixed at a weight ratio of 8:2 to prepare a positive electrode active material having a bimodal particle size distribution.

### Examples 2 to 4 and Comparative Examples 1 to 4

The positive electrode active materials of Examples 2 to 4 and Comparative Examples 1 to 4 were prepared by mixing the large-particle-diameter lithium nickel-based transition metal oxides having particle size characteristics as shown in Table 4 below with the same small-particle-diameter lithium nickel-based transition metal oxide as in Example 1.

### Experimental Example 1: Roundness Characteristics of Positive Electrode Active Material

For the positive electrode active materials of Examples 1 to 4 and Comparative Examples 1 to 4, the positive electrode active material particles were photographed at 800 magnification using a scanning electron microscope (SEM, Hitachi, S-4800) to obtain an image in which about 300 particles were photographed. Particles in the SEM image were two-dimensionalized through an image analysis program (Image J), and the maximum particle diameter ($D_{max}$, long diameter) and area of the particles were measured for the two-dimensional image. The measured values are substituted into Equation B below to obtain roundness, and for the derived roundness values, a dispersion histogram with the number of particles as a frequency is drawn by dividing the roundness by 0.05 units. Then, the roundness ($R_{10}$) when the cumulative frequency is 10%, the roundness ($R_{50}$) when the cumulative frequency is 50%, the maximum frequency roundness ratio ($F^{R}_{max}$), and the standard deviation ($S_R$) of the roundness were derived and shown in Table 1 below.

[Equation B]

$$\text{Roundness} = (4 \times \text{area}) / (\pi \times (D_{max})^2)$$

[Table 1]

|  | Large particle diameter | | | | Z | NSF |
|---|---|---|---|---|---|---|
|  | $R_{50}$ | $R_{10}$ | $F^{R}$max | $S^R$ |  |  |
| Example 1 | 0.87 | 0.76 | 0.23 | 0.08 | 2.86 | 0.49 |
| Example 2 | 0.91 | 0.80 | 0.31 | 0.07 | 4.37 | 0.35 |
| Example 3 | 0.91 | 0.81 | 0.30 | 0.07 | 4.16 | 0.35 |

(continued)

| | Large particle diameter | | | | Z | NSF |
|---|---|---|---|---|---|---|
| | $R_{50}$ | $R_{10}$ | $F^R$max | $S^R$ | | |
| Example 4 | 0.93 | 0.84 | 0.34 | 0.06 | 6.13 | 0.26 |
| Comparative Example 1 | 0.85 | 0.68 | 0.17 | 0.11 | 1.50 | 1.00 |
| Comparative Example 2 | 0.82 | 0.73 | 0.49 | 0.05 | 9.52 | 0.18 |
| Comparative Example 3 | 0.75 | 0.67 | 0.40 | 0.05 | 7.47 | 0.19 |
| Comparative Example 4 | 0.86 | 0.82 | 0.66 | 0.03 | 21.80 | 0.07 |

### Experimental Example 2: Evaluation of Positive Electrode Performance

The rolling density (g/cm$^3$) of each positive electrode active material prepared in Examples 1 to 4 and Comparative Examples 1 to 4 was measured using a density meter (Caver Pellet Press). Specifically, 3 g of each positive electrode active material prepared in the above examples and comparative examples was subdivided and filled tightly into a cylindrical holder with a diameter of 13 mm, and then a pressure of 9 tons was applied to measure the rolling density (g/cm$^3$). The results are shown in Table 2 below.

In addition, the amount of fine powder generated (% by volume) was calculated for an area of 1 $\mu$m or less by applying a pressure of 6 tons to the positive electrode active material using a rolling density meter (Carver Pellet Press), and then using the value obtained from the particle size analysis (PSD).

[Table 2]

| | Rolling density (g/cm$^3$) | Amount of fine powder generated (% by volume) |
|---|---|---|
| Example 1 | 3.309 | 3.53 |
| Example 2 | 3.312 | 3.90 |
| Example 3 | 3.363 | 3.45 |
| Example 4 | 3.435 | 2.37 |
| Comparative Example 1 | 3.368 | 4.93 |
| Comparative Example 2 | 3.343 | 3.93 |
| Comparative Example 3 | 3.337 | 4.19 |
| Comparative Example 4 | 3.310 | 4.42 |

Referring to Table 2 above, it can be seen that the rolling density of the examples satisfying the Z and NSF values was superior to that of Comparative Examples 1 to 4, and the amount of fine powder generated in the comparative examples was also relatively high. The above evaluation was not performed for the actually manufactured positive electrode, but was carried out by providing the same environment as the actual environment for manufacturing the positive electrode, and thus can be substantially regarded as a positive electrode performance.

### Experimental Example 3: Evaluation of High Temperature Performance

A monocell including a positive electrode and a negative electrode was manufactured. In the case of the positive electrode, 95 wt% of each of the positive electrode active materials prepared in Examples 1 to 4 and Comparative Examples 1 to 4, 3 wt% of PVDF, and 2 wt% of carbon black were mixed in a solvent to prepare a slurry, which was applied to a current collector and dried to prepare a positive electrode. In the case of the negative electrode, natural graphite and artificial graphite were mixed at a ratio of 5:5 and used as a negative electrode active material, and the negative electrode was prepared using 95.8 wt% of the negative electrode active material, 0.5 wt% of carbon black, and 3.7 wt% of a mixture of CMC and SBR. The loading of the negative electrode was 10.7 mg/cm$^2$, and the N/P ratio of the negative electrode and positive electrode was fixed at 1.08.

The capacity retention rate (%) of the mono cell including the positive electrode active material powders of Examples 1 to 4 and Comparative Examples 1 to 4 was measured for 30 cycles at a temperature of 45°C. When evaluating lifespan under the above methods and conditions, the resistance was calculated using the voltage and current during

discharge ($(V_0-V_1)/I$, where $V_0$ is a discharge start voltage, $V_1$ is a voltage after 60 seconds of discharge, and I is an applied current), and the resistance increase rate was calculated by using the post-cycle resistance compared to the initial resistance. The results are shown in Table 3 below.

[Table 3]

|  | Capacity retention rate at 45°C (%) | Resistance increase rate at 45°C (%) |
|---|---|---|
| Example 1 | 94.7 | 97.5 |
| Example 2 | 93.5 | 89.2 |
| Example 3 | 93.9 | 98.7 |
| Example 4 | 95.3 | 70.2 |
| Comparative Example 1 | 92.6 | 120.8 |
| Comparative Example 2 | 91.5 | 125.2 |
| Comparative Example 3 | 90.9 | 134.3 |
| Comparative Example 4 | 89.2 | 129.0 |

Referring to Table 3 above, it can be seen that the life characteristics are also affected by whether or not the Z and NSF values are satisfied, but the resistance characteristics are greatly affected by it. In addition, considering that the increase in resistance is significant despite the relatively early battery life of 30 cycles, it can be expected that there will be a significant difference in effect in consideration of the overall long-term performance.

**Claims**

1.   A positive electrode active material comprising

a lithium nickel-based transition metal oxide with a large particle diameter and a lithium nickel-based transition metal oxide with a small particle diameter,
wherein the lithium nickel-based transition metal oxide with a large particle diameter is in the form of a secondary particle that is an aggregate of primary particles,
wherein the lithium nickel-based transition metal oxide with a small particle diameter is in the form of at least one of a single particle formed of one nodule and a quasi-single particle that is a composite of 30 or less nodules,
wherein the lithium nickel-based transition metal oxide with a large particle diameter has a $D_{50}$ of 5 $\mu$m to 30 $\mu$m,
wherein the Z value defined by the following Equation 1 is 1.0 to 9.0, and
wherein the negative skewness factor (NSF) defined by Equation 2 below is 0.1 to 0.9:

[Equation 1]

$$Z = F^R_{max} / S^R$$

wherein the $F^R_{max}$ and $S^R$ are values obtained when drawing a histogram with the number of particles as a frequency by dividing the degree of roundness into 0.05 units in a roundness dispersion obtained from a scanning electron microscope (SEM) and an image analysis program for the lithium nickel-based transition metal oxide with a large particle diameter, wherein the $F^R_{max}$ is the maximum frequency roundness ratio (mode roundness ratio), which is the frequency of the class (roundness) with the highest frequency (number of particles) divided by the total number of analyzed particles, and $S^R$ is the standard deviation of the roundness,

[Equation 2]

$$NSF = (R_{50} - R_{10}) / F^R_{max}$$

wherein the $F^R_{max}$, $R_{50}$ and $R_{10}$- are values obtained when drawing a histogram with the number of particles as a frequency by dividing the degree of roundness into 0.05 units in a roundness dispersion obtained from a scanning electron microscope (SEM) and an image analysis program for the lithium nickel-based transition metal oxide with a large particle diameter, wherein the $F^R_{max}$ is the maximum frequency roundness ratio (mode roundness ratio), which is the frequency of the class (roundness) with the highest frequency (number of particles) divided by the total number of analyzed particles, $R_{50}$ is a roundness at a point with a cumulative frequency of 50%, and $R_{10}$ is a roundness at a point with a cumulative frequency of 10%.

2. The positive electrode active material according to claim 1, wherein the Z value is 2.0 to 7.0.

3. The positive electrode active material according to claim 1, wherein the negative skewness factor (NSF) is 0.2 to 0.7

4. The positive electrode active material according to claim 1, wherein the standard deviation ($S^R$) of the roundness is 0.05 to 0.15.

5. The positive electrode active material according to claim 1, wherein the maximum frequency roundness ratio ($F^R_{max}$) is 0.1 to 0.4.

6. The positive electrode active material according to claim 1, wherein the mixed weight ratio of the large-particle-diameter lithium nickel-based transition metal oxide to the small-particle-diameter lithium

7. The positive electrode active material according to claim 1, wherein the positive electrode active material has an aspect ratio of 0.60 to 0.99, and a roundness of 0.60 to 0.99.

8. The positive electrode active material according to claim 1, wherein each of the lithium nickel-based transition metal oxide with a large particle diameter and the lithium nickel-based transition metal oxide with a small particle diameter is independently represented by the following chemical formula (1) :

[Chemical Formula 1]   $Li_{1+x}Ni_aCo_bM^1_cM^2_dO_{2-e}X_e$

wherein $M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $0 \leq x \leq 0.5$, $0.5 \leq a < 1$, $0 < b \leq 0.4$, $0 < c \leq 0.4$, $0 \leq d \leq 0.05$, and $0 \leq e \leq 0.05$.

9. The positive electrode active material according to claim 1, wherein each of the lithium nickel-based transition metal oxide with a large particle diameter and the lithium nickel-based transition metal oxide with a small particle diameter independently have a nickel content in the transition metal of 70 mol% or more.

10. A positive electrode including the positive electrode active material according to claim 1.

11. A lithium secondary battery comprising the positive electrode of claim 10.

## INTERNATIONAL SEARCH REPORT

| International application No. |
|---|
| **PCT/KR2023/021402** |

**A.     CLASSIFICATION OF SUBJECT MATTER**

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B.     FIELDS SEARCHED**

Minimum documentation searched (classification system followed by classification symbols)

H01M 4/525(2010.01); C01G 53/00(2006.01); H01M 10/052(2010.01); H01M 4/02(2006.01); H01M 4/04(2006.01); H01M 4/36(2006.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 양극 활물질 (cathode active material), 바이모달(bimodal), 2차 입자(secondary particle), 단입자(single particle), 구형화도 (roundness), 음성 왜도 계수(negative skewness Factor, NSF)

**C.     DOCUMENTS CONSIDERED TO BE RELEVANT**

| Category* | Citation of document, with indication, where appropriate, of the relevant passages | Relevant to claim No. |
|---|---|---|
| A | KR 10-2021-0095149 A (SUMITOMO CHEMICAL CO., LTD.) 30 July 2021 (2021-07-30)<br>See claims 1 and 8-9; paragraphs [0230], [0234]-[0241], [0316]-[0321] and [0343]-[0345]; table 2; and figures 2a-2c. | 1-11 |
| A | KR 10-2020-0070649 A (LG CHEM, LTD.) 18 June 2020 (2020-06-18)<br>See claims 1, 4-5 and 8. | 1-11 |
| A | JP 2022-112207 A (PRIME PLANET ENERGY & SOLUTIONS INC.) 02 August 2022 (2022-08-02)<br>See entire document. | 1-11 |
| A | JP 2009-283353 A (PANASONIC CORP.) 03 December 2009 (2009-12-03)<br>See entire document. | 1-11 |
| A | JP 5973167 B2 (JX NIPPON MINING & METALS CORPORATION) 23 August 2016 (2016-08-23)<br>See entire document. | 1-11 |

☐ Further documents are listed in the continuation of Box C.        ☑ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **12 April 2024** | **15 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021402**

| Patent document cited in search report | | | Publication date (day/month/year) | Patent family member(s) | | | Publication date (day/month/year) |
|---|---|---|---|---|---|---|---|
| KR | 10-2021-0095149 | A | 30 July 2021 | CN | 113165907 | A | 23 July 2021 |
| | | | | CN | 113165907 | B | 04 April 2023 |
| | | | | EP | 3889112 | A1 | 06 October 2021 |
| | | | | EP | 3889112 | A4 | 14 September 2022 |
| | | | | JP | 2020-087879 | A | 04 June 2020 |
| | | | | JP | 6600734 | B1 | 30 October 2019 |
| | | | | US | 2022-0029158 | A1 | 27 January 2022 |
| | | | | WO | 2020-110486 | A1 | 04 June 2020 |
| KR | 10-2020-0070649 | A | 18 June 2020 | KR | 10-2543571 | B1 | 15 June 2023 |
| | | | | US | 2020-0185714 | A1 | 11 June 2020 |
| JP | 2022-112207 | A | 02 August 2022 | CN | 114824187 | A | 29 July 2022 |
| | | | | JP | 7273869 | B2 | 15 May 2023 |
| | | | | US | 2022-0238865 | A1 | 28 July 2022 |
| JP | 2009-283353 | A | 03 December 2009 | None | | | |
| JP | 5973167 | B2 | 23 August 2016 | JP | 2013-083648 | A1 | 13 May 2013 |
| | | | | WO | 2011-083648 | A1 | 14 July 2011 |

Form PCT/ISA/210 (patent family annex) (July 2022)

**EP 4 560 734 A1**

**REFERENCES CITED IN THE DESCRIPTION**

**Patent documents cited in the description**

*   KR 1020220184962